(19) Europäisches Patentamt
European Patent Office
Office européen des brevets

(11) **EP 4 726 981 A1**

(12) **EUROPEAN PATENT APPLICATION**

(43) Date of publication:
**15.04.2026 Bulletin 2026/16**

(21) Application number: **24205437.7**

(22) Date of filing: **09.10.2024**

(51) International Patent Classification (IPC):
**H02M 1/00** (2006.01)   **H02M 1/42** (2007.01)
**H05B 45/38** (2020.01)

(52) Cooperative Patent Classification (CPC):
**H02M 1/0025; H02M 1/0022; H02M 1/4225;**
**H05B 45/38**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Tridonic GmbH & Co. KG**
**6851 Dornbirn (AT)**

(72) Inventors:
• **Schneider, Miguel Philipp**
  **6851 Dornbirn (AT)**
• **Lochmann, Frank**
  **6851 Dornbirn (AT)**
• **Romano, Fabio**
  **6851 Dornbirn (AT)**

(74) Representative: **Rupp, Christian**
**Mitscherlich PartmbB**
**Karlstraße 7**
**80333 München (DE)**

(54) **POWER FACTOR CORRECTION INTEGRATED CIRCUIT FOR TOTAL HARMONIC DISTORTION IMPROVEMENT**

(57)   An actively switched PFC circuit for an LED driver is provided. Said PFC circuit comprises input terminals for receiving a mains AC voltage, and a feedback control unit configured for constant control of the output voltage of the PFC circuit by controlling the operation of a switch of the PFC circuit. Said PFC circuit further comprises an internal sinusoidal reference voltage source or input terminals for an external sinusoidal reference voltage source, and a combining circuit configured to combine a voltage derived from the mains AC voltage with the sinusoidal reference voltage, and issue a correction signal based on a comparison between the two voltages. Said PFC circuit further comprises means for incorporating the correction signal into a feedback loop of the feedback control unit, thereby compensating deviations in the mains AC voltage from a sinusoidal waveform.

Fig. 1

EP 4 726 981 A1

## Description

TECHNICAL FIELD

The present invention relates to actively switched power factor correction (PFC) circuits for LED drivers, with a particular focus on reducing total harmonic distortion (THD) and maintaining efficient current control. Specifically, the invention addresses the challenges of managing deviations in the mains alternating current (AC) voltage from its ideal sinusoidal waveform, which is critical for improving power quality and reducing the load on the electrical grid.

BACKGROUND

When an electrical consumer, such as an LED driver, is connected to the AC mains, it draws current to power the load. Ideally, this current should have a sinusoidal shape to minimize the load on the power grid and reduce energy losses. The parameter "THD" is used to measure how closely the waveform of the current matches a perfect sine wave, with 0% THD indicating an ideal sinusoidal waveform. Power electronics, particularly in LED drivers, are typically designed to achieve the lowest possible THD in order to improve efficiency and reduce stress on the grid.

Current control concepts for power factor correction, such as Boost PFC circuits, generally assume that the input voltage is a perfectly sinusoidal waveform (e.g., 230Vrms/50Hz). The current is then shaped according to this assumption, using the sinusoidal input voltage as a reference. However, in real-world applications, the AC mains voltage frequently deviates from this ideal sinusoidal form. Such deviations are common, particularly in environments where large isolation transformers or other power-distribution equipment are involved. These distortions often result in flattened or triangular waveforms rather than perfect sine waves.

When the input voltage deviates from its ideal sinusoidal shape, the current waveform is also affected, leading to higher THD. For example, in a Boost PFC circuit with a constant on-time (Ton), if the input voltage is triangular rather than sinusoidal, the resulting input current will also take on a triangular shape, increasing THD and reducing the overall efficiency of the system.

SUMMARY

The present invention addresses the challenge of maintaining low THD in PFC circuits by introducing a system that compensates for deviations in the mains alternating current (AC) voltage from the ideal sinusoidal waveform. This system ensures that when the input voltage deviates from its sinusoidal shape - whether due to distortions or irregularities - it dynamically adjusts the current control within the PFC circuit, thereby maintaining optimal performance and minimizing THD. This adjustment helps protect the efficiency and stability of the LED driver, ensuring it operates effectively even under non-ideal voltage conditions.

According to a first aspect of the invention, an actively switched PFC circuit for an LED driver is provided. Said PFC circuit comprises input terminals for receiving a mains AC voltage, and a feedback control unit configured for constant control of the output voltage of the PFC circuit by controlling the operation of a switch of the PFC circuit. Said PFC circuit further comprises an internal sinusoidal reference voltage source or input terminals for an external sinusoidal reference voltage source, and a combining circuit configured to combine a voltage derived from the mains AC voltage with the sinusoidal reference voltage, and issue a correction signal based on a comparison between the two voltages. Said PFC circuit further comprises means for incorporating the correction signal into a feedback loop of the feedback control unit, thereby compensating deviations in the mains AC voltage from a sinusoidal waveform.

The PFC circuit is designed to optimize the power factor by ensuring that the current drawn from the mains AC closely follows the ideal sinusoidal waveform. By utilizing a sinusoidal reference voltage - either generated internally or provided externally - the PFC circuit can dynamically correct deviations in the mains voltage. This reference voltage is compared with the actual input voltage to the PFC in order to determine a compensation/calibration value. This compensation/calibration value is then applied in the feedback control loop of the PFC, which results in a more sinusoidal current waveform, thereby significantly reducing THD, which improves overall power efficiency and lessens the strain on the power grid.

According to an implementation form of the first aspect of the invention, the feedback control unit comprises a unit generating a Ton time signal for the control terminal of the switch, wherein the time duration of the Ton time signal is adjusted based on the correction signal.

The first Ton value is computed based on the current value of the actual input voltage. Advantageously, this real-time adjustment ensures that the PFC circuit adapts its switching behavior to compensate for any deviations in the input voltage, thereby maintaining optimal power factor correction and minimizing THD. The Ton signal adjustment is crucial for keeping the output voltage stable, especially in the face of fluctuating input conditions.

According to an implementation form of the first aspect of the invention, the value of the correction signal is directly proportional to the current deviation of the amplitude of the mains AC voltage and the amplitude of the sinusoidal reference voltage.

This ensures that the greater the deviation in the mains voltage, the stronger the correction signal, allowing the feedback control unit to respond proportionally to voltage fluctuations. By maintaining this proportional relationship, the PFC circuit can more accurately and efficiently adjust its operations, thus improving overall power quality and reducing the impact of distorted input waveforms on the output.

According to an implementation form of the first aspect of the invention, the combining circuit comprises a signal processing unit configured to compare the amplitude of the mains AC voltage with the sinusoidal reference voltage and generate the correction signal based on the magnitude of the deviation between the two voltages.

For instance, the combining circuit may comprise a comparator, which provides a straightforward and efficient way to generate the correction signal by continuously comparing the two voltage signals. Possibly, said signal processing unit may further include an Analog-to-Digital Converter (ADC) for digitizing the voltages for precise deviation calculation.

According to an implementation form of the first aspect of the invention, the internal sinusoidal reference voltage is generated by an oscillator, a microcontroller, or an application-specific integrated circuit (ASIC).

The flexibility of generating the reference signal internally offers several advantages. Using an internal oscillator or microcontroller, the PFC circuit becomes more self-sufficient and less dependent on external components, enhancing reliability. Additionally, integrating the sinusoidal reference generation into an ASIC can optimize space, performance, and power consumption, especially in compact LED driver designs. This internal generation capability ensures that the PFC circuit consistently has access to a stable reference voltage, even in cases where external conditions may be unreliable.

According to an implementation form of the first aspect of the invention, the PFC circuit further comprises means for dynamically calculating a compensation value based on the comparison of the mains AC voltage with the internal or external sinusoidal reference voltage.

Advantageously, this dynamic calculation enables the PFC circuit to adjust the compensation in real time, providing an adaptive response to changing input conditions. By continuously recalculating the necessary compensation, the circuit can fine-tune its performance, ensuring that the power factor remains optimal and that THD is minimized. This feature enhances the circuit's resilience to fluctuations and ensures a more reliable and stable output voltage for the LED driver.

According to an implementation form of the first aspect of the invention, the PFC circuit is a boost PFC.

Boost PFC circuits are widely used in LED drivers and power supplies to increase input voltage while maintaining power factor correction. Advantageously, the above-proposed configurations apply to the boost PFC circuits.

According to a second aspect of the invention, an LED driver is provided. Said LED driver comprises a PFC circuit according to the first aspect of the invention or any of its implementation forms, respectively.

Advantageously, this configuration allows the LED driver to benefit from improved power quality and enhanced efficiency. By incorporating the actively switched PFC circuit with dynamic compensation, the LED driver can maintain optimal power factor correction and minimize THD, even when the mains AC voltage deviates from the ideal sinusoidal waveform.

According to a third aspect of the invention, an LED based luminaire is provided. Said LED based luminaire comprises an LED driver according to the second aspect of the invention.

Advantageously, the LED-based luminaire benefits from the enhanced performance and reliability provided by the LED driver with the actively switched PFC circuit. By ensuring that the input current follows a near-perfect sinusoidal waveform, the luminaire operates with higher efficiency and reduced THD, resulting in better power quality and lower energy consumption.

According to a fourth aspect of the invention, a method for improving the THD value of an actively switched PFC circuit for an LED driver is provided. Said PFC circuit comprises a feedback control unit for a constant control of the output voltage of the PFC. Said method comprises the steps of:

- supplying a mains AC voltage,
- supplying an internal sinusoidal reference voltage or an external sinusoidal reference voltage,
- combining, preferably by comparing, a voltage based on the mains AC voltage and the internal or external sinusoidal reference voltage, to generate a correction signal, and
- correcting a signal within a feedback loop of the feedback control unit based on the correction signal, the value of the value of the correction signal is directly proportional to the current deviation of the amplitude of the mains AC voltage and the amplitude of the sinusoidal reference voltage.

Advantageously, the method ensures that the current waveform closely follows the ideal sinusoidal shape. This significantly reduces harmonic distortion, improving the overall power quality and efficiency of the LED driver.

According to a fifth aspect of the invention, an integrated circuitry is provided. Said integrated circuitry, such as e.g. an ASIC or microcontroller, designed to perform the method according to the fourth aspect of the invention using an internal sinusoidal voltage reference.

This integration of the method into an ASIC or microcontroller enhances the PFC circuit's performance while maintaining cost-efficiency and reducing the overall complexity of the system.

DETAILED DESCRIPTION OF EMBODIMENTS

Exemplary embodiments of the invention are now further explained with respect to the drawings by way of example only, and not for limitation. In the drawings:

Fig. 1 shows a part of the proposed PFC circuit according to an embodiment of the present invention.

Fig. 2 shows an exemplary Boost PFC circuit according to an embodiment of the present invention.

Fig. 3 shows a method according to an embodiment of the present invention.

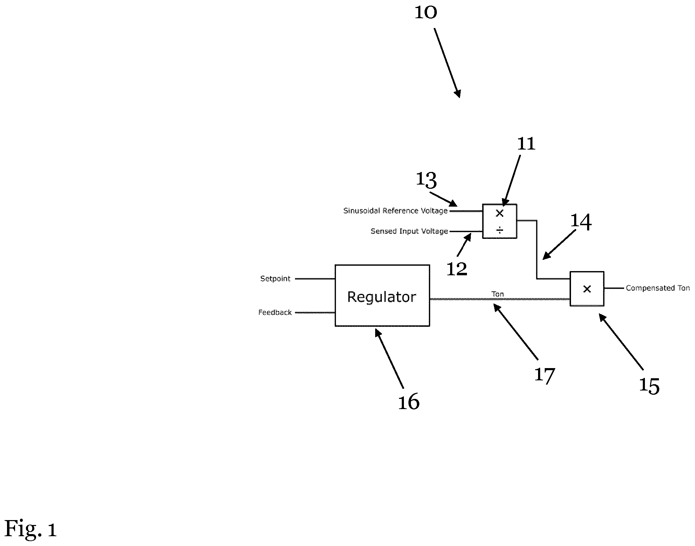

Fig. 1 illustrates a part of an exemplary actively switched PFC circuit 10 for an LED driver, showcasing the key components and their interaction according to the present invention.

The PFC circuit 10 is provided with input terminals (not explicitly shown in the figure) that receive the mains AC voltage. This voltage serves as the input for the PFC circuit to regulate and maintain optimal power factor.

The PFC circuit 10 comprises a feedback control unit configured for constant control of the output voltage of the PFC circuit 10 by controlling the operation of a switch of the PFC circuit 10. This unit controls the output voltage by regulating the operation of a switch (not shown explicitly) based on the feedback it receives. The feedback loop continuously adjusts the switch's operation to maintain a stable output voltage, even when there are fluctuations in the mains AC voltage.

The PFC circuit 10 comprises a sinusoidal reference voltage source 13, which can either be an internal source or an external reference voltage supplied through dedicated terminals. This reference voltage acts as an idealized form of the AC mains input, providing the desired shape the PFC circuit 10 aims to achieve. This sinusoidal reference voltage is used as a benchmark for evaluating the quality of the incoming AC mains voltage and correcting any deviations from the desired waveform.

A combining circuit 11 is responsible for comparing the mains AC voltage 12 (represented by the "Sensed Input Voltage" in the figure) with the sinusoidal reference voltage 13. The output of this combining circuit is a correction signal 14, which quantifies the deviation of the mains voltage from the ideal sinusoidal waveform.

The PFC circuit 10 further comprises means for incorporating the correction signal 14 into a feedback loop of the feedback control unit, thereby compensating deviations in the mains AC voltage from a sinusoidal waveform.

In a particular configuration, the feedback control unit comprises a unit 16 generating a Ton time signal 17 for the control terminal of the switch, wherein the time duration of the Ton time signal is adjusted based on the correction signal 14. The unit 16 may be a regulator.

Possibly, the regulator controls the operation of the PFC circuit based on two inputs: "Setpoint", which represents the desired or reference value of the circuit's output (e.g., output voltage), and "Feedback", which represents the actual measured output, fed back to the regulator for comparison with the setpoint.

The compensated Ton signal is used to control the operation of the switch, in particular, the time the switch remains active.

Possibly, the compensated Ton signal may be fed back into the feedback control loop. This ensures that the operation of the switch within the PFC circuit is adjusted in real-time, allowing the circuit to maintain optimal performance even under varying mains AC conditions. The compensated signal thus helps in dynamically correcting the output voltage and improving the overall power factor of the LED driver.

Possibly, the value of the correction signal 14 is directly proportional to the current deviation of the amplitude of the mains AC voltage 12 and the amplitude of the sinusoidal reference voltage 13.

Possibly, the combining circuit 11 comprises a signal processing unit configured to compare the amplitude of the mains AC voltage 12 with the sinusoidal reference voltage 13 and generate the correction signal 14 based on the magnitude of the deviation between the two voltages. Said signal processing unit may further include an ADC for digitizing the voltages for precise deviation calculation. The digitized values are then processed to calculate the precise deviation. The output of this division is the correction signal 14 that quantifies how much the actual input voltage deviates from the sinusoidal reference.

Notably, the figure illustrates a control mechanism where a feedback loop regulates the switching behavior of the PFC circuit in real time. By comparing the input voltage to a sinusoidal reference and generating a correction signal, the regulator adjusts the switching time (Ton) to compensate for fluctuations in the input voltage. This allows for improved PFC and more stable output for the LED driver under varying AC mains conditions.

The PFC circuit 10, as a whole, ensures that the input current is drawn in phase with the input voltage, improving efficiency and reducing harmonic distortion, which is particularly important for high-efficiency LED drivers.

To perform this compensation, a sinusoidal reference voltage is necessary. This reference can be generated either through analog methods, such as using an oscillator, or digitally via a microcontroller, ASIC, or other digital methods. The reference serves as the "ideal" waveform that the input voltage is compared against.

Possibly, the PFC circuit 10 further comprises means for dynamically calculating a compensation value based on the comparison of the mains AC voltage 12 with the internal or external sinusoidal reference voltage 13.

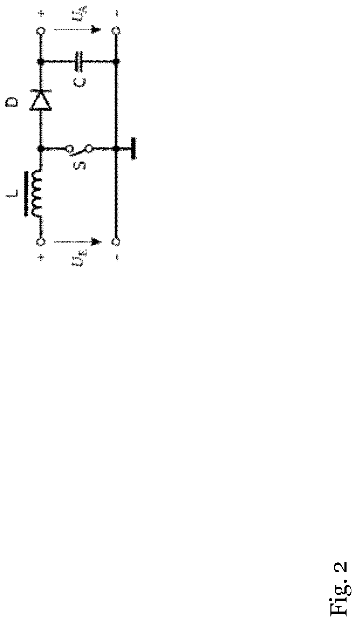

The compensation value or the compensation factor ($t_{factor}$) is derived from the ratio of the sinusoidal reference voltage ($U_{ideal}$) to the actual input voltage ($U_{real}$). This factor is used to scale the on-time (Ton) of the controller to adjust for deviations in the input voltage. The derivation of this factor is based on the law of induction (see Fig. 2), which relates the rate of change of current through an inductor to the applied voltage:

For the ideal voltage: $U_{ideal} = L\dfrac{di}{Ton_{ideal}}$ ,

and for the real voltage: $U_{real} = L\dfrac{di}{Ton_{real}}$ , where di represents the change in current, L represents the inductance, and Ton represents the time duration the switch remains active.

To maintain a sinusoidal current waveform despite a distorted input voltage, we must adjust the on-time (Ton) based on the ratio between the ideal reference voltage and the real input voltage:

$$\frac{U_{ideal}}{U_{real}} = \frac{Ton_{real}}{Ton_{ideal}} = t_{factor}$$

Using the derived compensation factor ($t_{factor}$), the real on-time ($Ton_{real}$) can be adjusted from the ideal on-time. This ensures that the PFC circuit adjusts the switching period in response to variations in the input voltage, allowing it to maintain a sinusoidal current waveform, even if the input voltage deviates from the ideal sinusoidal shape.

The PFC circuit 10 described in the previous embodiments can be implemented as a boost PFC circuit. Boost PFC circuits are widely utilized in LED drivers and power supply applications due to their ability to step up the input voltage while simultaneously maintaining a high power factor.

Fig. 2 illustrates a typical Boost PFC circuit that works in conjunction with the actively switched PFC circuit shown in Fig. 1. In the circuit of Fig. 2, the mains AC voltage $U_E$, also depicted as mains AC voltage 12 in Fig. 1, is processed by the combining circuit 11, which compares it with the sinusoidal reference voltage 13. The switch S, which is responsible for controlling the PFC circuit, adjusts its on-time based on the output of the feedback control loop.

The feedback control loop, as illustrated in Fig. 1, processes both the input voltage $U_E$ and the output voltage $U_{OUT}$. The output voltage $U_{OUT}$ is compared by the regulator 16 with a predefined setpoint, such as 400V DC for an input voltage of 230V AC. Based on the deviation between the actual output voltage $U_{OUT}$ and the setpoint, the regulator 16 adjusts the on-time of the switch S to correct any deviations, ensuring stable operation of the PFC circuit. This correction process is aided by the combining circuit 11, which compensates for any distortions in the mains AC voltage.

In the context of this invention, the implementation of a boost PFC circuit is particularly advantageous, as the boost topology's ability to step up the input voltage while maintaining precise control over the switch timing makes it highly effective in addressing both voltage regulation and PFC requirements.

According to one aspect of the invention, an LED driver is provided, which incorporates a PFC circuit 10 designed according to the previous embodiments of the invention.

Advantageously, this configuration allows the LED driver to benefit from improved power quality and enhanced efficiency. By incorporating the actively switched PFC circuit with dynamic compensation, the LED driver can maintain optimal power factor correction and minimize THD, even when the mains AC voltage deviates from the ideal sinusoidal waveform. This ensures consistent and stable power delivery to the LED, reducing flicker and enhancing performance. Additionally, the flexibility of using an internal or external sinusoidal reference voltage provides adaptability to various electrical environments, while the feedback control system ensures stable output voltage under fluctuating input conditions. This overall protection and optimization result in a more reliable LED driver, extending the operational life of the LED system without increasing design complexity or cost.

According to a further aspect of the invention, an LED-based luminaire is provided, which includes an LED driver as described above.

Advantageously, the LED-based luminaire benefits from the enhanced performance and reliability provided by the LED driver with the actively switched PFC circuit 10. By ensuring that the input current follows a near-perfect sinusoidal waveform, the luminaire operates with higher efficiency and reduced THD, resulting in better power quality and lower energy consumption. This translates into longer operational life for the LEDs, as they are protected from voltage fluctuations and electrical disturbances, such as surges or dips, that can cause premature failure or degradation. Additionally, the stable and consistent output voltage provided by the driver ensures flicker-free lighting, improving the overall user experience. This makes the luminaire particularly well-suited for both commercial and industrial applications where power stability is crucial. Moreover, the ability of the luminaire to adapt to various power supply conditions without requiring significant design modifications adds to its versatility, making it a more robust and reliable lighting solution in diverse environments.

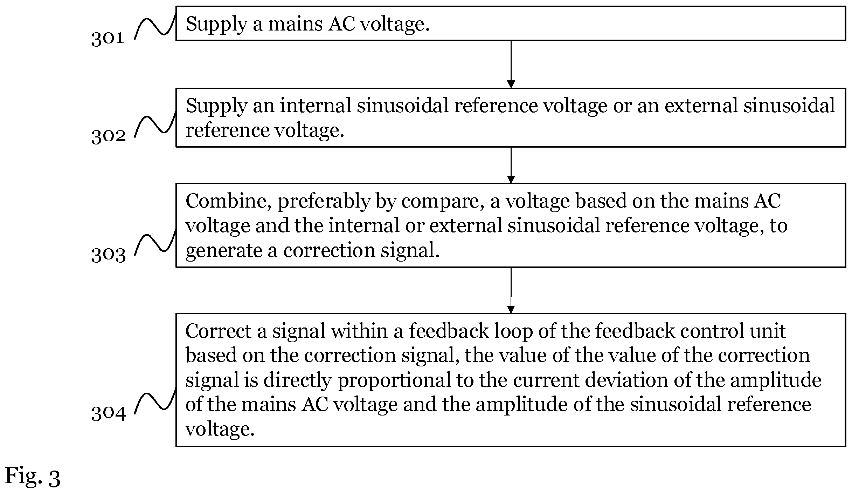

According to another aspect of the invention, a method 300 is provided for improving the THD value of an actively switched PFC circuit 10 for an LED driver. The PFC circuit 10 have a feedback control unit for a constant control of the output voltage of the PFC circuit 10. Fig. 3 shows a method 300 according to an embodiment of the present invention. The method 300 comprises the following steps:

Step 301 of supplying a mains AC voltage.

Step 302 of supplying an internal sinusoidal reference voltage or an external sinusoidal reference voltage.

Step 303 of combining, preferably by comparing, a voltage based on the mains AC voltage and the internal or external sinusoidal reference voltage, to generate a correction signal.

Step 304 of correcting a signal within a feedback loop of the feedback control unit based on the correction signal, the value of the value of the correction signal is directly proportional to the current deviation of the amplitude of the mains AC voltage and the amplitude of the sinusoidal reference voltage.

Advantageously, the method 300 ensures that the current waveform closely follows the ideal sinusoidal shape. This significantly reduces harmonic distortion, improving the overall power quality and efficiency of the LED driver.

The method continuously monitors the amplitude of the mains AC voltage and adjusts the feedback loop based on the generated correction signal. This real-time adjustment compensates for voltage deviations, ensuring that the PFC circuit remains stable and operates optimally even when the input voltage fluctuates. This is particularly important in environments where power conditions are unstable.

The feedback loop ensures constant control of the output voltage by incorporating the correction signal, which is directly proportional to the deviation between the actual and reference voltages. This results in more stable operation of the LED driver, protecting the LEDs from potential damage caused by voltage irregularities, and extending their operational life.

The method allows the use of either an internal or external sinusoidal reference voltage, offering flexibility in system design. This adaptability ensures that the PFC circuit can perform efficiently under different power supply conditions and configurations, making it suitable for various applications.

By correcting deviations in the input voltage and maintaining a low THD, the method helps the PFC circuit and the LED driver consume less energy, leading to reduced operational costs. The precise control of the output voltage also ensures that the LEDs operate at optimal power levels, minimizing energy waste and heat generation.

The method's ability to improve THD without requiring significant hardware changes or additional external components makes it a cost-effective solution. It enhances the performance of existing PFC circuits by using dynamic feedback control and voltage comparison, resulting in a more efficient system without increasing complexity.

In summary, this method offers a powerful and flexible way to enhance the performance, efficiency, and reliability of actively switched PFC circuits, particularly for LED drivers, while significantly reducing THD and adapting to real-world voltage variations.

According to another aspect of the invention, an integrated circuit, such as an ASIC or microcontroller, is provided. It is designed to perform the method described above using an internal sinusoidal voltage reference. This integrated approach improves efficiency, reduces the need for external components, and enables real-time correction of voltage deviations, resulting in lower THD and more stable LED driver operation.

While various embodiments of the present invention have been described above, it should be understood that they have been presented by way of example only, and not by limitation. Numerous changes to the disclosed embodiments can be made in accordance with the disclosure herein without departing from the spirit or scope of the invention. Thus, the breadth and scope of the present invention should not be limited by any of the above-described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

**Claims**

1. An actively switched power factor correction, PFC, circuit (10) for an LED driver, comprising:

   - input terminals for receiving a mains alternating current, AC, voltage,
   - a feedback control unit configured for constant control of the output voltage of the PFC circuit (10) by controlling the operation of a switch of the PFC circuit (10),
   - an internal sinusoidal reference voltage source or input terminals for an external sinusoidal reference voltage source,
   - a combining circuit (11) configured to combine a voltage (12) derived from the mains AC voltage with the sinusoidal reference voltage (13), and issue a correction signal (14) based on a comparison between the two voltages, and
   - means for incorporating the correction signal (14) into a feedback loop of the feedback control unit, thereby compensating deviations in the mains AC voltage from a sinusoidal waveform.

2. The PFC circuit (10) according to claim 1, wherein the feedback control unit comprises a unit (16) generating a Ton time signal (17) for the control terminal of the switch, wherein the time duration of the Ton time signal is adjusted based on the correction signal (14).

3. The PFC circuit (10) according to claim 1 or 2, wherein the value of the correction signal (14) is directly proportional to the current deviation of the amplitude of the mains AC voltage (12) and the amplitude of the sinusoidal reference voltage (13).

4. The PFC circuit (10) according to any of the preceding claims, wherein the combining circuit (11) comprises a signal processing unit configured to compare the amplitude of the mains AC voltage (12) with the sinusoidal reference voltage (13) and generate the correction signal (14) based on the magnitude of the deviation between the two voltages.

5. The PFC circuit (10) according to any of the preceding claims, wherein the internal sinusoidal reference voltage (13) is generated by an oscillator, a microcontroller, or an application-specific integrated circuit, ASIC.

6. The PFC circuit (10) according to any preceding claims, further comprising means for dynamically calculating a compensation value based on the comparison of the mains AC voltage (12) with the internal or external sinusoidal reference voltage (13).

7. The PFC circuit (10) according to any preceding claims, being a boost PFC circuit.

8. An LED driver comprising a PFC circuit (10) according to any of the claims 1 to 7.

9. An LED luminaire comprising an LED driver according to claim 8.

10. A method (300) for improving the THD value of an actively switched PFC circuit (10) for an LED driver, having a feedback control unit for a constant control of the output voltage of the PFC circuit (10), comprising the steps of:

   - supplying (301) a mains AC voltage,
   - supplying (302) an internal sinusoidal reference voltage or an external sinusoidal reference voltage,
   - combining (303), preferably by comparing, a voltage based on the mains AC voltage and the internal or external sinusoidal reference voltage, to generate a correction signal, and
   - correcting (304) a signal within a feedback loop of the feedback control unit based on the correction signal, the value of the value of the correction signal is directly proportional to the current deviation of the amplitude of the mains AC voltage and the amplitude of the sinusoidal reference voltage.

11. An integrated circuitry, such as an application-specific integrated circuit, ASIC, or microcontroller, designed to perform the method (300) according to claim 10 using an internal sinusoidal voltage reference.

EP 4 726 981 A1

10

11

13

Sinusoidal Reference Voltage ——— ┌───┐
                                   │ × │
Sensed Input Voltage ———————————── │ ÷ │
                                   └───┘
12

14

Setpoint ———— ┌──────────┐
              │          │        ┌───┐
              │ Regulator│──Ton───│ × │─── Compensated Ton
Feedback ———— │          │        └───┘
              └──────────┘

17

15

16

Fig. 1

Fig. 2

| | Supply a mains AC voltage. |
|---|---|

301

| | Supply an internal sinusoidal reference voltage or an external sinusoidal reference voltage. |
|---|---|

302

| | Combine, preferably by compare, a voltage based on the mains AC voltage and the internal or external sinusoidal reference voltage, to generate a correction signal. |
|---|---|

303

| | Correct a signal within a feedback loop of the feedback control unit based on the correction signal, the value of the value of the correction signal is directly proportional to the current deviation of the amplitude of the mains AC voltage and the amplitude of the sinusoidal reference voltage. |
|---|---|

304

Fig. 3

**EUROPEAN SEARCH REPORT**

Application Number

EP 24 20 5437

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/222117 A1 (POON HUNG PIU [CN]) 18 July 2019 (2019-07-18) * figure 1 * * figure 3 * * figure 5 * * figure 10 * * paragraph [0009] - paragraph [0011] * * paragraph [0044] - paragraph [0057] * * paragraph [0112] - paragraph [0123] * ----- | 1-11 | INV. H02M1/00 H02M1/42 H05B45/38 |
| A | BAEK SEUNGHOON ET AL: "Input AC Voltage Sensorless Control Method for Single-Phase PFC Converter Using Frequency Estimator", 2021 IEEE ENERGY CONVERSION CONGRESS AND EXPOSITION (ECCE), IEEE, 10 October 2021 (2021-10-10), pages 2814-2818, XP034019220, DOI: 10.1109/ECCE47101.2021.9595354 [retrieved on 2021-10-29] * figures 1-4 * * page 2814 - page 2816 * ----- | 1-11 | |
| A | US 2019/260287 A1 (SON GI BONG [KR] ET AL) 22 August 2019 (2019-08-22) * figures 1-2 * * figure 4 * * paragraph [0040] - paragraph [0047] * ----- | 1-11 | TECHNICAL FIELDS SEARCHED (IPC) H02M H05B |

The present search report has been drawn up for all claims

| Place of search | Date of completion of the search | Examiner |
|---|---|---|
| The Hague | 4 March 2025 | Riehl, Philippe |

EPO FORM 1503 03.82 (P04C01)

## ANNEX TO THE EUROPEAN SEARCH REPORT
## ON EUROPEAN PATENT APPLICATION NO.

EP 24 20 5437

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2025

| Patent document cited in search report | Publication date | Patent family member(s) | Publication date |
|---|---|---|---|
| US 2019222117 A1 | 18-07-2019 | CN 110048597 A | 23-07-2019 |
| | | EP 3518404 A1 | 31-07-2019 |
| | | US 2019222117 A1 | 18-07-2019 |
| US 2019260287 A1 | 22-08-2019 | KR 20190099595 A | 28-08-2019 |
| | | US 2019260287 A1 | 22-08-2019 |

EPO FORM P0459

For more details about this annex : see Official Journal of the European Patent Office, No. 12/82